# EUROPEAN PATENT SPECIFICATION

(11) **EP 2 125 285 B1**
(45) Date of publication and mention of the grant of the patent: **14.09.2011**
(21) Application number: 08709515.4
(22) Date of filing: 25.02.2008
(51) Int. Cl.: B23Q 5/32, F16L 41/04

(54) **HOT TAPPING MACHINE**
MASCHINE ZUM ANBOHREN UNTER DRUCK
MACHINE À PIQUAGES SUR LIGNES EN CHARGE

(30) Priority: 26.02.2007 GB 0703716
(43) Date of publication of application: 02.12.2009
(73) Proprietor: Mirage Machines Limited, Jubilee Parkway Derby DE21 4BB (GB)
(72) Inventor: SILK, Richard, Derbyshire DE7 9HR (GB)
(74) Representative: Jackson, Nicholas Andrew
(86) International application number: PCT/GB2008/000634
(87) International publication number: WO 2008/104753

(56) References cited:
- EP-A- 1 375 055
- WO-A-2006/105951
- US-B1- 6 648 562

## Description

### BACKGROUND

### a. Field of the Invention

The present invention relates to a hot tapping machine, and in particular to a hot tapping machine for use in the oil and gas industry.

### b. Background to the Invention

Hot tapping, sometimes referred to as under pressure drilling, is a technique that is used to drill into pipes or vessels that contain fluids under pressure. Hot tapping is normally carried out in order to connect a new branch to an existing pipeline without disrupting the flow of fluid within the pipeline and without losing significant quantities of the fluid being carried within the pipeline. For example, if a valve jams in the closed position, hot tapping will be used to bypass the jammed valve and to enable the flow of fluid to be re-enabled. Hot tapping is typically carried out under pressures of a few atmospheres up to 1400 psi (9650 kPa), but these pressures may be much higher, US - 6,648,562 discloses a hot tapping machine according to the preamble of claim 1.

### SUMMARY OF THE INVENTION

The invention is defined in claim 1.

In use, the first end of the body will be closest to the pipeline into which a hot tapping is to be made, and the second end will be remote from the pipeline.

Preferably the drive for axial movement is mounted adjacent the second end of the body.

By placing the rotational drive as close as possible to the point where cutting will take place, build up of torque in the spindle bar is reduced, leading to a faster, smoother cut.

In use, the first end of the body will be sealed to the pipeline being tapped into. Preferably, on exposure to pipeline pressure after the hole has been cut, that pressure will flow throughout the interior of the body, so that equal and opposite pressures will act on both sides of the axial drive means. As a result, no internal sealing between the spindle bar and the body is required.

The axial movement is preferably produced by mounting a feed screw internally of the spindle bar and fitting a feed nut to the end of the bar within the body. Rotation of the feed screw then causes the feed nut and the spindle bar to travel axially along the length of the body. A motor (preferably a hydraulic motor) can be provided to rotate the feed screw and additionally a manually operable rotation device can be coupled to the screw, so that the spindle bar can be advanced under manual control.

Within the body, guide rods can extend from end to end of the body, and the feed nut can be slidably mounted on these guide rods to prevent the feed screw from rotating. The guide rods can be circular section rods which are tensioned between caps at the opposite ends of the body, and these rods can pass through appropriately sized parallel bores in the feed nut.

A transducer can be arranged to monitor (through a Hall Effect sensor or the like) the number of rotations of the feed screw. By knowing the pitch of the thread on the screw, this reading can be converted into an out pout indicating the amount by which the spindle bar has been advanced.

### BRIEF DESCRIPTION OF THE DRAWINGS

- Figure 1: shows a generic illustration of hot tapping;
- Figure 2: is a side view of a hot tapping machine in accordance with the invention;
- Figure 3: is a cross-section through the machine of Figure 2, on the line A-A;
- Figure 3a: is a cross-section through the machine of Figure 2, on the line B-B:
- Figure 4: is a cross section through the feed nut on the line C-C from Figure 5;
- Figure 5: is an external view of the feed nut;
- Figure 6: is an end view of the nut of Figures 6 and 7, in the direction of arrow D;
- Figure 7: is an external view of part of the axial drive mechanism;
- Figure 8: is a cross-section through the axial drive unit of Figure 7 on the line E-E;
- Figure 9: is a section through the rotational drive gearbox on the line F-F from Figure 10;
- Figure 10: is an end view of the gearbox of Figure 9; and
- Figure 11: is a perspective view of the means for manual operation of the axial drive.

### DETAILED DESCRIPTION

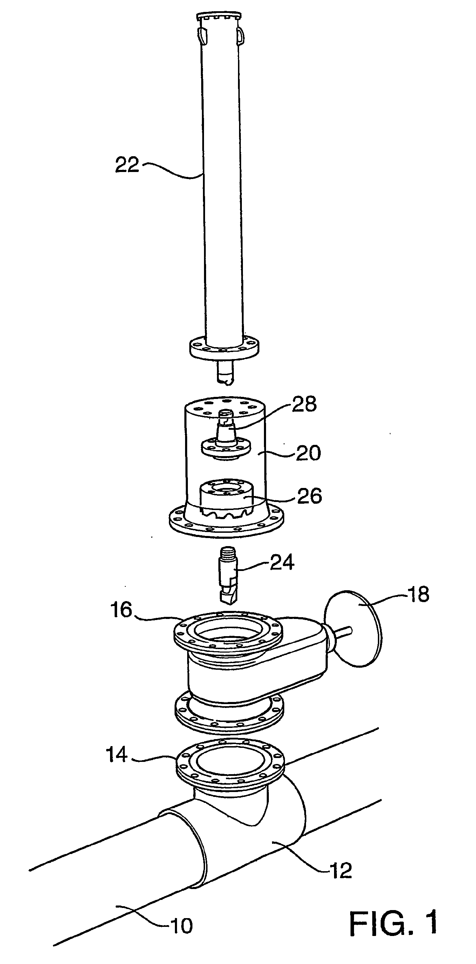

Figure 1 shows a schematic outline of a hot tapping process. A main pipeline 10 into which a secondary pipe is to be tapped is provided with a sleeve 12 to which a T-joint 14 is welded. The sleeve 12 is welded to the main pipeline 10 at the point where the tap is to be made. The T-piece has a flange, as can be seen. At this stage, the bore of the T-piece 14 is empty because no hole has yet been made in the wall of the main pipeline 10. A valve body 16 with top and bottom flanges is then mounted onto the flange 14. The valve body 16 has a handle 18 which is used to open and close flow through the valve body. At this stage the valve is fully open. Next an adaptor body 20 is mounted to the top flange of the valve body 16, and a hot tapping machine 22 is mounted to the top of the adaptor 20. Shown in exploded view are respectively a pilot drill 24, a cutting body 26 and a boring bar 28. In use these three components will all be secured to the lower end of the hot tapping machine 22.

In use, all these components will be mounted together, in a sealed and pressure tight manner. The hot tapping machine is then operated and the pilot drill 24 and cutting head 26 are advanced through the bore of the valve body 16, through the T-piece 14 and into contact with the surface of the pipeline 10 where the hot tapping machine rotates the cutting bar to cut out a circular disc from the pipeline wall. This circular disc is referred to a "coupon". The coupon is retained by the pilot drill 24. The cutting head is then withdrawn into the adaptor body 20, and the valve member 18 is then operated to close the valve in the valve body 16. The hot tapping machine and the adaptor 20 can then be removed and a suitable branch pipeline can be attached to the upper flange of the valve body 16, before the valve 18 is re-opened to establish communication through the branch pipeline.

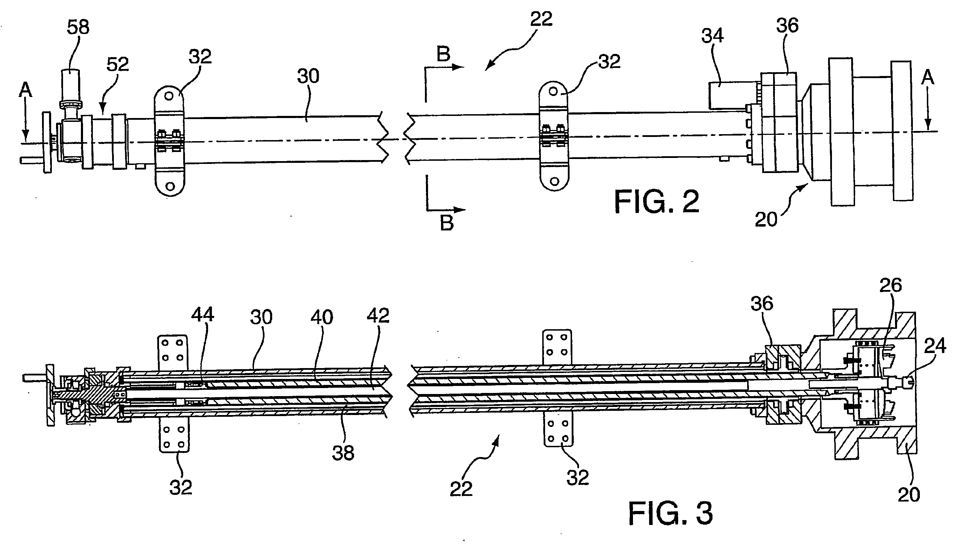

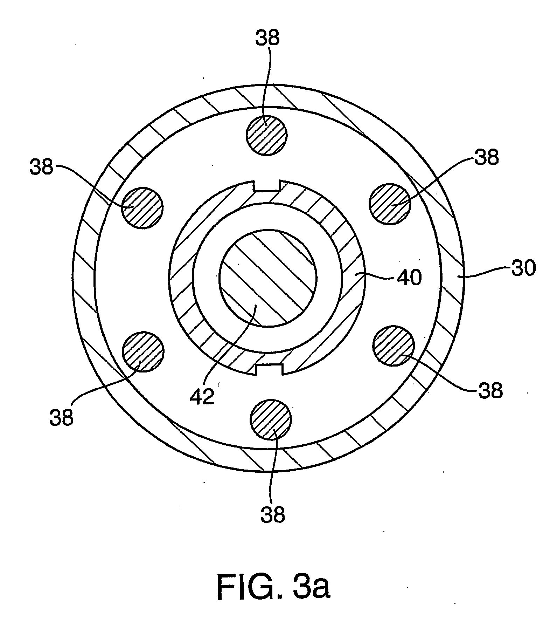

The hot tapping machine 22 will now be described in more detail with reference to the remaining figures of the drawings. Figures 2 and 3 show the elongate nature of the hot tapping machine. It will be noted that in these drawings the length of the machine is shown broken away. The elongate part of the machine may need to be very long because, in use, the cutting head may need to be advanced through a number of components such as the adaptor 20, the valve body 16 and the T-piece 14, and the total axial length of these components may be as much as 2 to 3 metres.

The machine has an outer body 30 in the form of a cylindrical tube. Figure 2 shows, by way of example, two mounting brackets 32 which may be used for securing the machine to a suitable structure.

At the right-hand end of the machine, as seen in Figures 2 and 3, an adaptor 20 is shown mounted on the end of the body 30 from which the cutting head 26 will be extended. Adjacent this end of the machine is a drive motor 34 which feeds into a gearbox 36 through which the cutting head 26 will be rotated in a manner to be described.

Along the major part of the body 30, there are a number of guide rods 38, a spindle bar 40 and a feed screw 42. The arrangement of these components is shown in the cross-section of Figure 3A. The guide rods 38 are stationary and are locked in position at both ends of the body 30 and are tensioned between the ends of the body. The spindle bar 40, which is hollow and carries the cutting head 26, travels axially within the body, and is guided on the guide rods 38, as will be described in more detail. The feed screw 42 is axially stationary but is rotated by another drive motor 58.

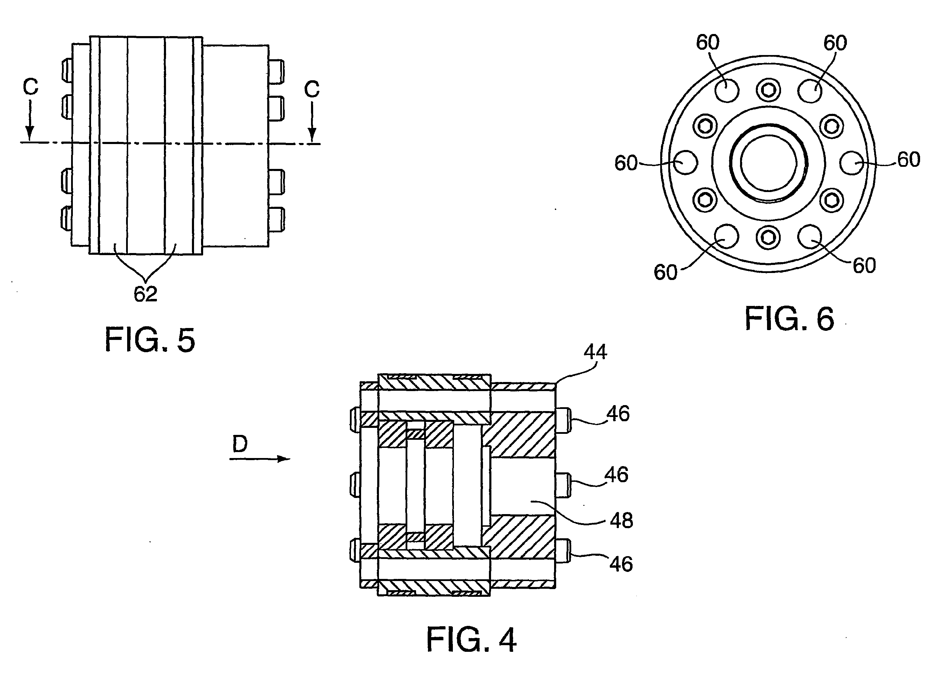

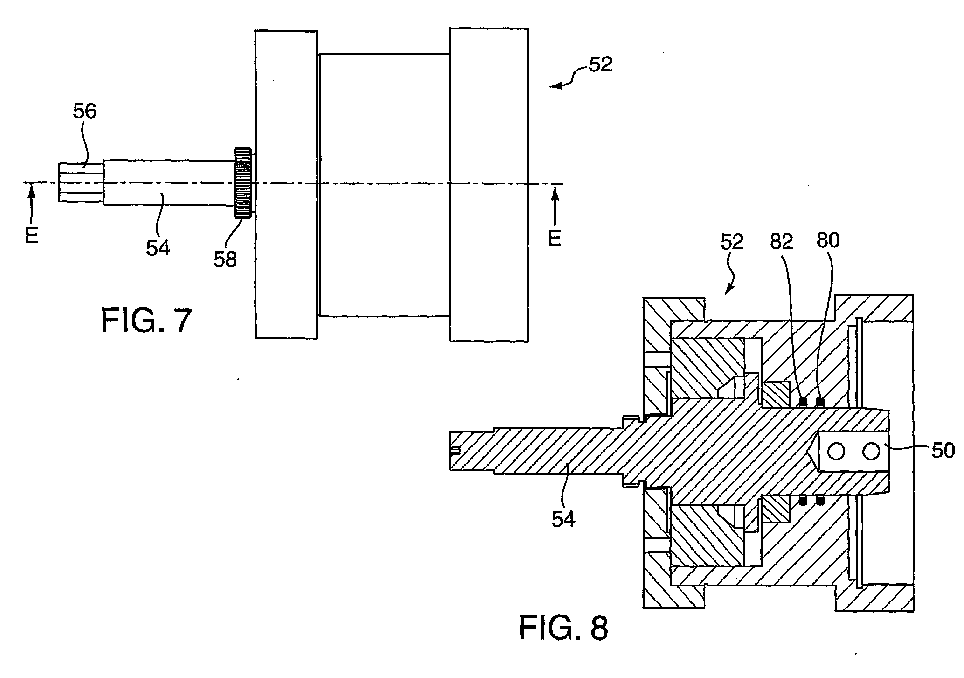

To produce the axial movement of the spindle bar 40, the end of the bar is secured in a feed nut 44 (Figure 4) by means of bolts 46. The feed nut has a central bore 48 with internal threading which engages with the external threaded surface of the feed screw 42. The feed screw passes right through the feed nut 44 and is attached to a socket 50 in a thrust body 52 (Figures 7 and 8) at the left-hand end of the machine. The thrust body 52 has a spindle 54, with a hexagonal boss 56 for connection to a drive mechanism driven by the motor 58. This drive mechanism is not shown in detail but its operation is to rotate a spindle 54 which in turn rotates the feed screw 42. As the feed nut is held against rotation, by being guided on the rods 38, rotation of the feed screw results in the feed nut travelling axially along the screw.

It will be seen that the spindle 54 carries a toothed ring 58, and the teeth on this ring can be counted by a suitable sensor to count the number of revolutions made by the feed screw. Counting these revolutions, together with the knowledge of the pitch of the thread of the feed screw enables a calculation of the distance by which the spindle bar has been advanced to be made. This distance can be displayed on a display module attached to the machine.

The feed nut 52 includes a suitable bearing to absorb the thrust forces which will be passed back up the spindle bar when the machine is cutting into a pipeline surface.

Figure 6 shows the bores 60 in the feed nut by means of which the feed nut is threaded onto the guide rods 38. The feed nut also has low-friction bands 62 around its circumference to enable it to slide easily within the body 30.

At the right-hand end of the machine, the spindle bar 40 passes through a central bore 62 in the rotation drive gearbox 36. This bore 62 carries splines 64 which locate in corresponding keyways in the external surface of the spindle bar. The rotation is provided by the drive motor 34 which has an output shaft which engages in a socket 66 to drive a pinion 68 which in turn meshes with and drives a final drive pinion 70. The final drive pinion is fixed to a ring 72 which carries the splines 64, and allows the spindle bar to move through the gearbox 36, whilst being rotated by the engagement of the splines 64 in the key ways of the spindle bar. On the right-hand side of the gearbox 36, the spindle bar is connected to a cutting head 26 and a pilot drill 24.

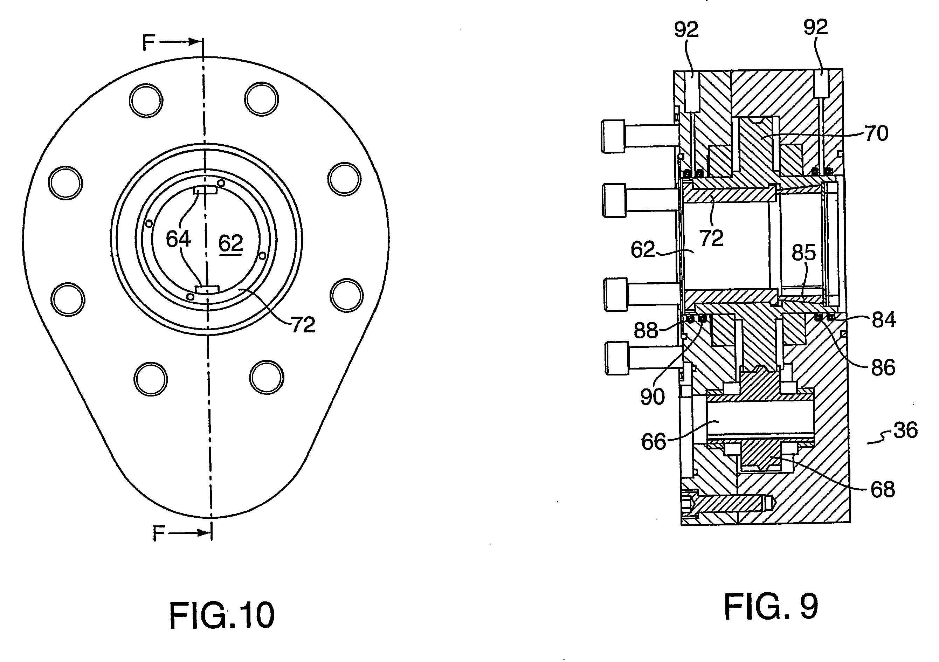

On the exit side of the gearbox 36 (right hand side in Figure 9), the spindle bar 40 passes through a cone 85 which can be moved in and out of a conical seat to adjust the clearance between the drive gear and the spindle bar to a minimum to remove "bar droop" at extended distances from the gearbox. The cone can be locked in place by a locknut.

When the drill has penetrated the wall of the main pipeline 10, pressurised fluid from inside the pipeline will flow through the valve body 16, through the adapter 20 and into the hot tapping machine. This fluid will flow through the central bore of the gearbox 36, up the body 30 in the outer annulus which contains the guide rods 38, around the feed nut 44 and then down into the inner annulus between the spindle bar 40 and the feed screw 42.

It is important that the seals between the body 30 and the exterior be sufficient to contain this pressure within the body but there is no need to sub-divide the body by internal seals. To seal the body against leakage, the thrust body 52 has seals 80, 82. At the other end of the machine, there are seals at 84, 86, 88 and 90. As these latter seals have to seal between relatively moving parts, seal monitoring ports 92 are provided between the pairs of seals 84, 86 and 88, 90 so that the seal performance can be monitored.

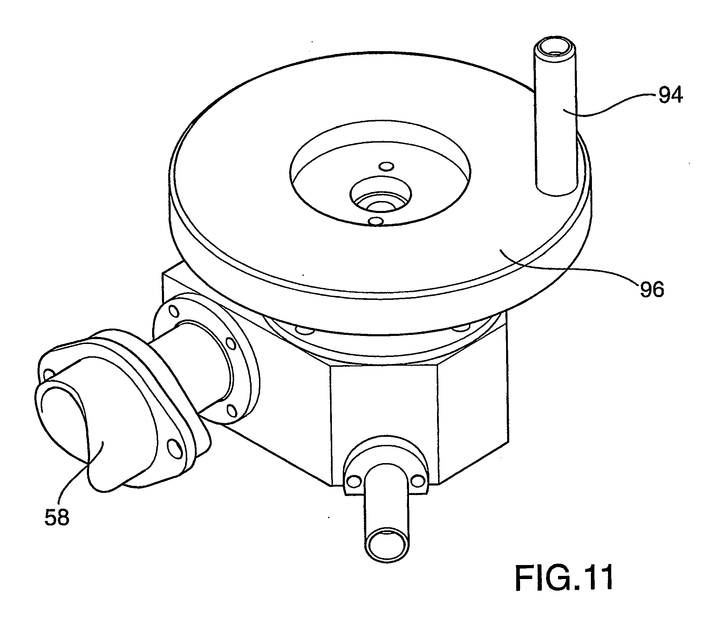

Finally, Figure 11 shows the drive housing at the left-hand end of the machine, with a manual drive operated by a handle 94 which drives a rotary disc 96 turning the handle 94 to turn the spindle 54 which drives the feed nut along the length of the feed screw and therefore advances the spindle bar towards the right-hand side as seen in Figures 2 and 3.

In operation it may be convenient for the spindle bar to be advanced manually until the cutting head 26 (or pilot drill 24) makes initial contact with the surface of the main pipeline to be cut, and then to allow the hydraulic drives 34, 58 to take over to rotate and advance the spindle bar to achieve the necessary cutting. By knowledge of the wall thickness of the pipeline being cut, the distance which the spindle bar has to advance to complete the cut would be known, and by watching the output of the transducer connected to the toothed collar 58, it will be possible to know exactly when to stop feeding the spindle bar any further. Retraction of the bar (which will be done without rotation) and purely by the axial drive 58, 94 can then be activated.

The separation of the axial and rotational drives for the spindle bar allows each to be optimised, and avoids the build up of torque in the bar which would result if the rotational drive of the bar was located at the end of the machine remote from the pipeline.

## Claims

1. A hot tapping machine (22) having an elongate body (30) with a first end and a second end, a spindle bar (40) mounted within the body (30) for axial and rotational movement relative to the body (30) and wherein separate drive motors (34, 58) are provided for driving the axial movement and the rotational movement, the spindle bar (40) being adapted to carry at one end a cutting head (26) for cutting a hole in a pipeline (10) and the axial movement being such as to extend the spindle bar (40) out of the first end of the body (30), **characterised in that** the hot tapping machine further comprises an adaptor (20) mounted to the first end of the body (30) and in which the adaptor (20) is arranged to be mounted to the flange of a valve body (16) on the pipeline (10) and the drive (34) for rotational movement is mounted adjacent the first end of the body (30) and adjacent the adaptor (20).

2. A machine (22) as claimed in Claim 1, wherein the drive (58) for axial movement is mounted adjacent the second end of the body (30).

3. A machine (22) as claimed in Claim 1 or Claim 2 in which the cutting head (26) is arranged, in use, to be withdrawn into the adaptor body (20).

4. A machine (22) as claimed in any preceding claim in which once the cutting head (26) has cut a hole in the pipeline (10) and the hot tapping machine (22) is mounted to the pipeline (10), the elongate body (30) is arranged for pressurised fluid from inside the pipeline (10) to flow into the elongate body (30).

5. A machine (22) as claimed in any preceding claim, wherein the body (30) and its internal components are arranged to allow fluid under pressure, from a pipeline (10) into which a hot tapping is made, to flow throughout the body (30).

6. A machine (22) as claimed in any preceding claim, wherein a feed screw (42) is mounted internally of the spindle bar (40) within the body (30), a feed nut (44) is fitted to the end of the bar (40) within the body (30) and means are provided to rotate the feed screw (42) to cause the feed nut (44) and the spindle bar (40) to travel axially along the length of the body (30).

7. A machine (22) as claimed in Claim 6, wherein the means to rotate the feed screw (42) comprises a hydraulic motor (58).

8. A machine (22) as claimed in Claim 6 or Claim 7, including a manually operable rotation device (96) coupled to the feed screw (42), so that the spindle bar (40) can be advanced under manual control.

9. A machine (22) as claimed in any one of Claims 6 to 8, wherein guide rods (38) extend within the body (30) from end to end of the body (30), and the feed nut (44) is slidably mounted on these guide rods (38) to prevent the feed screw (42) from rotating.

10. A machine (22) as claimed in Claim 9, wherein the guide rods (38) are circular section rods which are tensioned between caps at the opposite ends of the body (30), and pass through appropriately sized parallel bores (60) in the feed nut (44).

11. A machine (22) as claimed in any preceding claim, wherein the drive (34) for rotational movement comprises a hydraulic motor coupled to a gearbox (36).

12. A machine (22) as claimed in any preceding claim, wherein a transducer is arranged to monitor the number of rotations of the feed screw (42), and electronic means are provided to convert the output from the transducer into an output indicating the amount by which the spindle bar (40) has been advanced.

## Patentansprüche

1. Eine Maschine zum Anbohren unter Druck (22) mit einem länglichen Gehäuse (30) mit einem ersten Ende und einem zweiten Ende, einer an dem Gehäuse (30) befestigten Spindelstange (40) zur axialen und Rotationsbewegung in Bezug auf das Gehäuse (30) und wobei getrennte Antriebsmotoren (34, 58) zum Antrieb der axialen Bewegung und der Rotationsbewegung bereitgestellt werden, wobei die Spindelstange (40) angepasst ist, um an einem Ende einen Schneidkopf (26) zum Schneiden eines Loches in eine Rohrleitung (10) zu tragen, und die axiale Bewegung so ist, um die Spindelstange (40) aus dem ersten Ende des Gehäuses (30) zu erstrecken, **dadurch gekennzeichnet, dass** die Maschine zum Anbohren unter Druck des weiteren einen an dem ersten Ende des Gehäuses (30) befestigten Adapter (20) umfasst, und wobei der Adapter (20) angeordnet ist, um an dem Flansch eines Ventilgehäuses (16) auf der Rohrleitung (10) befestigt zu werden, und der Antrieb (34) für die Rotationsbewegung benachbart zu dem ersten Ende des Gehäuses (30) und benachbart zu dem Adapter (20) befestigt ist.

2. Eine Maschine (22) gemäß Anspruch 1, wobei der Antrieb (58) für die axiale Bewegung benachbart zu dem zweiten Ende des Gehäuses (30) befestigt ist.

3. Eine Maschine (22) gemäß Anspruch 1 oder Anspruch 2, in welcher der Schneidkopf (26) angeordnet ist, um bei Verwendung in das Adaptergehäuse (20) gezogen zu werden.

4. Eine Maschine (22) gemäß einem der vorhergehenden Ansprüche, in welcher, wenn der Schneidkopf (26) ein Loch in die Rohrleitung (10) gebohrt hat und die Maschine zum Anbohren unter Druck (22) an der Rohrleitung (10) befestigt ist, das längliche Gehäuse (30) angeordnet ist, so dass unter Druck gesetzte Flüssigkeit aus dem Inneren der Rohrleitung (10) in das längliche Gehäuse (30) fließt.

5. Eine Maschine (22) gemäß einem der vorhergehenden Ansprüche, wobei das Gehäuse (30) und seine inneren Bestandteile so angeordnet sind, um es einer Flüssigkeit unter Druck zu ermöglichen, aus einer Rohrleitung (10), in welcher die Anbohrung unter Druck vorgenommen wurde, durch das Gehäuse (30) zu fließen.

6. Eine Maschine (22) gemäß einem der vorhergehenden Ansprüche, wobei eine Vorschubschraube (42) innen an der Spindelstange (40) innerhalb des Gehäuses (30) befestigt ist, eine Vorschubmutter (44) an dem Ende der Stange (40) innerhalb des Gehäuses (30) angeordnet ist und Mittel zum Rotieren der Vorschubschraube (42) bereitgestellt sind, um eine Verschiebung der Vorschubmutter (44) und der Spindelstange (40) axial entlang der Länge des Gehäuses (30) zu verursachen.

7. Eine Maschine (22) gemäß Anspruch 6, wobei die Mittel zum Rotieren der Vorschubschraube (42) einen hydraulischen Motor (58) umfasst.

8. Eine Maschine (22) gemäß Anspruch 6 oder Anspruch 7, die eine manuell bedienbare Rotationsvorrichtung (96) enthält, die mit der Vorschubschraube (42) gekoppelt ist, so dass die Spindelstange (40) mit manueller Steuerung befördert werden kann.

9. Eine Maschine (22) gemäß einem der Ansprüche 6 bis 8, wobei Führungsstangen (38) sich innerhalb des Gehäuses (30) von einem Ende des Gehäuses bis zum anderen Ende des Gehäuses erstrecken, und die Vorschubmutter (44) gleitend auf diesen Führungsstangen (38) befestigt ist, um eine Rotation der Vorschubschraube (42) zu verhindern.

10. Eine Maschine (22) gemäß Anspruch 9, wobei die Führungsstangen (38) kreisförmige Abschnittsstangen sind, welche zwischen Kappen an dem gegenüber liegenden Enden des Gehäuses (30) eingespannt sind, und durch entsprechend große parallele Bohrungen (60) in der Vorschubmutter (44) durchführen.

11. Eine Maschine (22) gemäß einem der vorhergehenden Ansprüche, wobei der Antrieb (34) für die Rotationsbewegung einen mit einem Getriebe (36) gekoppelten hydraulischen Motor umfasst.

12. Eine Maschine (22) gemäß einem der vorhergehenden Ansprüche, wobei ein Wandler angeordnet ist, um die Anzahl der Rotationen der Vorschubschraube (42) zu beobachten, und elektronische Mittel vorgesehen sind, um die Ausgangsleistung des Wandlers in eine Ausgangsleistung umzuwandeln, die den Betrag angibt, mit welchem die Spindelstange (40) befördert worden ist.

## Revendications

1. Machine (22) de piquage en charge, comprenant un corps allongé (30) muni d'une première extrémité et d'une seconde extrémité, une broche (40) montée à l'intérieur dudit corps (30) pour accomplir des mouvements axial et rotatoire par rapport audit corps (30), des moteurs d'entraînement distincts (34, 58) étant prévus pour entraîner le mouvement axial et le mouvement rotatoire, ladite broche (40) étant agencée pour porter, à l'une des extrémités, une tête de coupe (26) conçue pour forer un trou dans un pipe-line (10), et le mouvement axial étant propre à déployer ladite broche (40) hors de la première extrémité du corps (30), **caractérisée par le fait que** ladite machine de piquage en charge comprend, en outre, un adaptateur (20) monté sur la première extrémité du corps (30), ledit adaptateur (20) étant conçu pour être monté sur la bride d'un corps de vanne (16) implanté sur le pipe-line (10), et l'entraînement (34) dévolu au mouvement rotatoire étant monté au voisinage direct de la première extrémité du corps (30), et au voisinage direct dudit adaptateur (20).

2. Machine (22) selon la revendication 1, dans laquelle l'entraînement (58), dédié au mouvement axial, est monté au voisinage direct de la seconde extrémité du corps (30).

3. Machine (22) selon la revendication 1 ou la revendication 2, dans laquelle la tête de coupe (26) est conçue pour être rétractée, en service, dans le corps de l'adaptateur (20).

4. Machine (22) selon une quelconque revendication précédente, dans laquelle, après que la tête de coupe (26) a foré un trou dans le pipe-line (10) et après que ladite machine (22) de piquage en charge a été montée sur ledit pipe-line (10), le corps allongé (30) est agencé de telle sorte qu'un fluide pressurisé afflue dans ledit corps allongé (30) depuis l'intérieur dudit pipe-line (10).

5. Machine (22) selon une quelconque revendication précédente, dans laquelle le corps (30) et ses éléments structurels intérieurs sont agencés pour permettre à un fluide pressurisé, provenant d'un pipe-line (10) dans lequel un piquage en charge est effectué, de circuler par ledit corps (30).

6. Machine (22) selon une quelconque revendication précédente, dans laquelle une vis d'avance (42) est logée dans la broche (40), à l'intérieur du corps (30), un écrou d'avance (44) est ajusté sur l'extrémité de ladite broche (40), à l'intérieur dudit corps (30), et des moyens sont prévus pour faire tourner ladite vis d'avance (42), afin de déplacer axialement ledit écrou d'avance (44) et ladite broche (40) dans le sens de la longueur dudit corps (30).

7. Machine (22) selon la revendication 6, dans laquelle les moyens, destinés à faire tourner la vis d'avance (42), comprennent un moteur hydraulique (58).

8. Machine (22) selon la revendication 6 ou la revendication 7, incluant un dispositif (96) de mise en rotation, actionnable à la main et relié à la vis d'avance (42), de façon telle que la broche (40) puisse progresser par commande manuelle.

9. Machine (22) selon l'une quelconque des revendications 6 à 8, dans laquelle des tiges de guidage (38) s'étendent à l'intérieur du corps (30), d'une extrémité à l'autre dudit corps (30), et l'écrou d'avance (44) est monté coulissant sur ces tiges de guidage (38), en vue d'interdire une rotation de la vis d'avance (42).

10. Machine (22) selon la revendication 9, dans laquelle les tiges de guidage (38) sont des tiges de section circulaire qui sont tendues entre des bouchons, aux extrémités opposées du corps (30), et franchissent des perçages parallèles (60) de dimensionnement approprié, pratiqués dans l'écrou d'avance (44).

11. Machine (22) selon une quelconque revendication précédente, dans laquelle l'entraînement (34), assigné au mouvement rotatoire, comprend un moteur hydraulique relié à un engrenage (36).

12. Machine (22) selon une quelconque revendication précédente, dans laquelle un transducteur est affecté à la surveillance du nombre de rotations de la vis d'avance (42), et des moyens électroniques sont prévus pour convertir le signal de sortie, émanant dudit transducteur, en un signal de sortie indicatif de la course dont la broche (40) a progressé.
